## Europäisches Patentamt

## European Patent Office

## Office européen des brevets

(19)

(11) Publication number: **0 012 326**
**B1**

# EUROPEAN PATENT SPECIFICATION

(12)

(45) Date of publication of patent specification: **16.03.83**

(51) Int. Cl.³: **C 25 D 3/56**

(21) Application number: **79104890.3**

(22) Date of filing: **04.12.79**

(54) **A method of electroplating nickel-iron alloys.**

(30) Priority: **18.12.78 US 970709**

(43) Date of publication of application:
**25.06.80 Bulletin 80/13**

(45) Publication of the grant of the patent:
**16.03.83 Bulletin 83/11**

(84) Designated Contracting States:
**DE FR GB IT**

(56) References cited:
**DE - A - 2 105 529**
**DE - B - 1 259 666**
**FR - A - 2 202 953**
**FR - A - 2 245 784**
**US - A - 3 031 386**

(73) Proprietor: **International Business Machines
Corporation
Armonk, N.Y. 10504 (US)**

(72) Inventor: **Anderson, Nathaniel Carl
R. R. 1
Pine Island, Minnesota 55963 (US)**
Inventor: **Grover, Jr., Charles Raymond
5396 Dodara Grove Court
San Jose, California 95123 (US)**

(74) Representative: **Chaudhry, Mohammad Saeed
IBM United Kingdom Patent Operations Hursley
Park
Winchester Hants, SO21 2JN (GB)**

Courier Press, Leamington Spa, England

**0 012 326**

## A method of electroplating nickel-iron alloys

This invention relates to a method of electroplating nickel-iron alloys onto an article.

Thin films of approximately 80:20 Ni:Fe alloy composition commonly known as Permalloy alloy have low coercivity and high permeability. Those qualities make such films highly suitable for use in magnetic switching, recording heads and memory devices. We have discovered that devices with complex topographical shapes made by plating with previously known baths exhibit a substantial gradient in the nickel/iron composition ratio from point to point within a device. We have also discovered that the gradients result from the variations in current densities from point to point across the topography of an object being plated which has such a complex shape. For objects such as magnetic pole pieces for magnetic recording heads employed in high density, high speed magnetic recording for data processing systems and the like, uniformity of quality is critical. Substantial variation from uniformity of composition of Ni:Fe 80:20 alloys is undesirable. For example it can produce magnetostrictive alloys with high coercivity which can be unsatisfactory for use in products which require low coercivity. A substantial gradient of the Ni:Fe composition ratio along the surface of a magnetic recording head element significantly affects magnetic recording performance of the head adversely. A variation in current density from point to point along the surface of a head during an electroplating operation has been found to be very significant in its effect of varying uniformity of the composition ratio of plated films. It is, therefore, a primary object of the present invention to provide a nickel-iron electrodeposition process operable with a plating current of a low current density for plating a film which provides a minimal gradient of the composition ratio of nickel to iron along a complex surface.

Electrodeposition of nickel-iron thin films has long been known using an aqueous solution of nickel and ferrous sulfamates, sulfates and chlorides. In a plating bath the ratio of the nickel ion concentration to the ferrous ion concentration has generally been above 30 to 1, the pH has been within the range between 2 and 3.5, and the solution temperature has been maintained below 30°C. The current density has been maintained generally above 10 milliamps per square centimetre of cathode area.

For example, U.S. patent 3,027,309 discloses the deposition of a nickel iron composition using a solution of nickel and ferrous sulfamates with a ratio of nickel to iron concentration to ferrous iron concentration of between 35 to 1 and 40 to 1 with a pH of between 2 and 3.5. The extremely high nickel ion concentration is stated as 113 g/l, and the ferrous ion concentration is 2.82 g/l. The solution temperature is maintained below 30°C and, after a striking current, a deposition current density is maintained at approximately 10 milliamps per squire centimetre of cathode area.

Another U.S. patent 3,317,410 discloses an electrodeposition system for nickel-iron alloys using a chloride metal salt solution containing boric acid, sodium lauryl sulfate, and sodium saccharin. The operating conditions are a pH of 3.0 and a current density of 25 milliamps per centimetre squared. Nickel concentration in one example is about 49 g/l and $Fe^{++}$ ion concentration is about 0.12 g/l or in a separate example, it is about 0.98 g/l in Tables I and II thereof respectively. No range of values is suggested. The nickel to iron ion concentration ratio is about 500 to 4 or about 50 to 1. Values in between Tables I and II are not discussed or suggested. The current density is relatively high.

United States patent No. 4,102,756 discloses a nickel-iron alloy electroplating system comprising a high plating current density process of 10—200 milliamps per centimetre squared. In Table VII for plating 80:20 NiFe alloy onto a flat sheet it uses 1.1—1.7 g/l of $Fe^{++}$ ion and 7—37 g/l of $Ni^{++}$ ions or a nickel ion to ferrous ion concentration ratio from about 6.4 to 1 to 22 to 1. When plating into openings in a mask (Table VIII) preferably at a plating current density from 2 to 60 ma/cm$^2$, it uses 0.3—0.7 g/l of $Fe^{++}$ ions and 17—44 g/l of $Ni^{++}$ ions. The Ni/Fe ion ratio is about 60 to 1. The current densities used and the ion concentrations used are too high to produce uniformity of plating onto an object with a high degree of variation in the topography of the object.

According to the invention there is provided a method of electroplating nickel-iron alloy onto an article with a relatively high degree of uniformity of nickel-iron alloy composition over a range of plating current densities characterised in that the method comprises employing a plating current density from 2 milliamperes per centimetre squared to 12 milliamperes per centimetre squared, with a plating bath solution having ferrous ion concentration between 0.15 and 0.3 grams per litre and a nickel ion concentration between 10 and 14 grams per litre, the pH of the bath being 3.

The pH of the bath is maintained at about 3 at a temperature of 20—35°C, wherein the ratio of nickel ion to ferrous ion concentration is from 45 to 1 to 70 to 1.

In particular, the electrodeposition of approximately 80:20 nickel-iron alloy can include chloride and sulfate metal salts of nickel and iron together with boric acid, sodium saccharin, a wetting agent and sodium chloride. The temperature is maintained at approximately 23°C at a pH of about 3.0. A current density of about 4—8 milliamps per centimetre squared can be used most advantageously.

The electrodeposition process of the present invention is especially useful to provide thin layers of magnetic material for pole pieces of magnetic heads.

The invention will now be described by way of example with reference to the accompanying drawings in which:—

FIG. 1 shows a sectional view of a thin film inductive magnetic recording head with an electroplated upper pole piece having a substantial degree of topographical curvature tending to cause nonuniformity of plating current density;

FIG. 2 shows in schematic form the general arrangement of 154 thin film, batch fabricated magnetic recording heads deposited on a silicon chip with eleven horizontal rows and 14 vertical columns of magnetic recording heads with four samples selected by row and column as indicated;

FIG. 3 shows a plan view of the head of FIG. 1;

FIG. 4 shows the variations in values of anisotropy field $H_k$ as well as its incremental charge $\Delta H_k$ and the permeability as a function of the weight percentage of iron in the plated alloys produced by a "High Current Density" (HCD) bath;

FIG. 5 shows the weight percentage of Fe metal by weight in the alloys produced by a HCD bath as a function of plating current density per unit area;

FIG. 6 shows the curve of FIG. 5 compared with a "Lower Current Density" (LCD) bath employed in accordance with this invention;

FIG. 7 shows a curve of the weight percentage of Fe metal in a plated deposit as a function of the number of grams per litre of $FeSO_4$ in a bath near the conditions in Table I for the LCD—B bath within a range of values of $FeSO_4$;

FIG. 8 shows a calculated simulation of the weight percentage of Fe in a deposition from an LCD bath as a function of current density. The simulation is based upon data generated from an equation based upon a first equation developed from a regression analysis of actual data and Figure 8 shows five curves for various levels of NaCl in the bath;

FIG. 9 shows a similar set of curves to those of FIG. 8 for reduced $Fe^{++}$ and $Ni^{++}$ ion concentrations in the bath;

FIG. 10 shows a sample of a comparison of the actual measured weight percentage of Fe in films by actual analysis versus the values of Fe in films calculated using the formula shown there which is a second regression analysis equation;

FIG. 11 shows a curve of the simulated, calculated values of the weight percentage of Fe in a film versus current density J, for slightly more $Fe^{++}$ in solution than in FIG. 9, with the same NaCl concentration as in the middle curve;

FIG. 12 shows a similar curve to that of FIG. 11 for a slightly increased $Fe^{++}$ in concentration and the maximum Fe film percentage content by weight is increased accordingly;

FIG. 13 shows a similar regression analysis simulation plot to those shown in the preceding FIGS. but for a "HCD" bath with a far higher $Fe^{++}$ concentration and higher $Ni^{++}$ concentrations with no salt;

FIG. 14 shows another plot comparing simulated and actual values using the last in a series of regression analysis equations versus plating current density J; and

FIGS. 15 and 16 show calculated values of Fe percentage in an alloy as a function of current density J for several values of $Ni^{++}$ concentration in the bath.

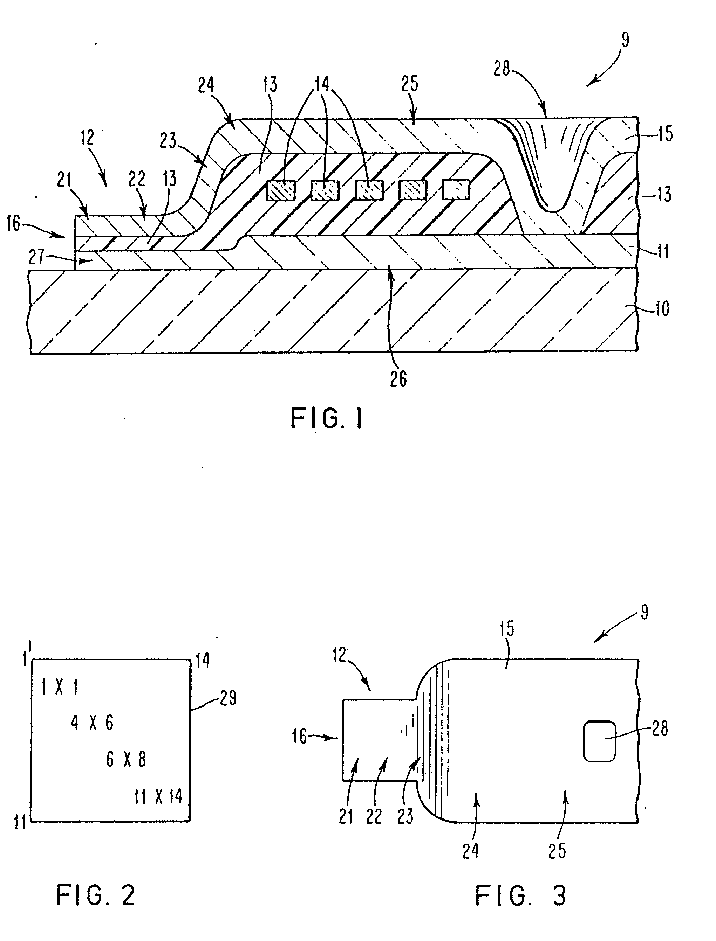

FIG. 1 shows a sectional view of a thin film magnetic recording head 9 with a substrate 10 of a material such as $SiO_2$ upon which a first thin film magnetic pole piece layer 11 of Permalloy alloy is deposited, with a greater thickness beyond the throat area 12. Above layer 11 is deposited an insulator 13 of a material such as a baked photoresist. Copper coils 14 are deposited upon the insulator 13. Above the coils 14 is more of the insulator 13 which was deposited later.

The top layer is the upper pole piece layer 15 which is curved down to the left to form a throat 12 and a gap 16 for reading a magnetic recording medium. Pole piece 15 curves down to the right to join pole piece 11 at "back gap" 28. The upper pole piece 15 can be deposited by evaporating a thin layer of metal upon insulator 13 and the remainder of the substrate, applying a resist mask and then electroplating through the mask onto the metal. Subsequently, areas not required are removed by resist and etching techniques. What is of interest here is that because of the topography of pole piece 15, the electroplating in areas 21, 22, 23, 24 and 25 can produce different alloys from the same plating bath solution when using previously known baths to produce 79:21 to 81:19 Ni:Fe alloys, for example.

Reference to FIG. 3 shows the structure of pole piece 15 shown looking down on the top of pole piece 15.

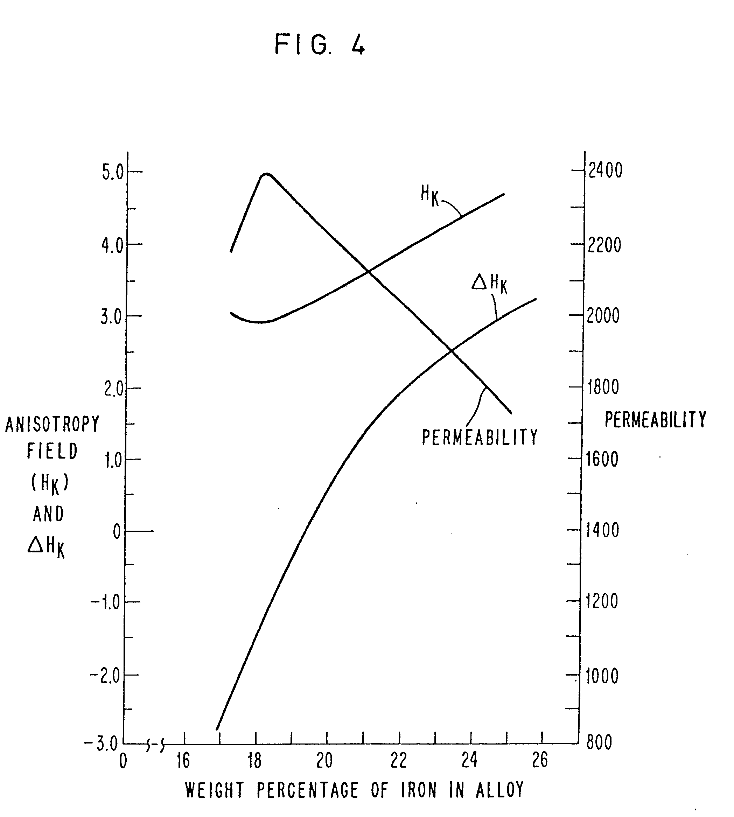

In running tests on a thin film magnetic head 9, it was observed that the sides of the B—H loops at high drive fields were not vertical as expected. This phenomenon was assumed to be due to the presence of different magnetic phases in the plated films 11 and 15. This assumption was verified with the aid of x-ray fluorescence and permeability measurement. It was found that the plated films 11 and 15 had a composition gradient in the direction of movement of a paddle used to stir the plating bath during the plating process. Composition analysis of the Permalloy elements in the film heads 9 was performed using an electron microprobe. It was found that the upper pole piece layer 15 exhibited localized nonuniformity. The material in the pole tip region of throat 12, especially at the edge of the curvature corresponding to the zero throat height in area 22 was iron poor. Compositional uniformity is very critical to the magnetic properties and FIG. 4 gives the relationship for what we will refer to as a "High Current Density" (HCD) bath between composition of a plated film and various magnetic parameters. Compositional variation across the wafer, compounded by a compositional gradient along

**0012326**

the head element, could very significantly affect head performance. Hence, it is imperative to minimize this gradient, not only across an element but across the entire wafer as well.

There are several factors that affect composition of a plated film. The variation in current density during plating is very significant in its effect upon alloy composition. Changing the bath composition by reducing the total dischargeable ions in solution and performing the plating at a very low current density was discovered to permit plating films with a minimal compositional gradient of the alloy. The differences in the composition of the Permalloy alloy across the pole pieces were reduced from 6—7% for HCD baths down to less than 2% overall within a device and diagonally across the wafer for the low current density LCD bath. The magnetic transducers made by the LCD bath had a better reading and writing stability and a better reproducibility than the transducers made from the HCD bath.

Table I shows the compositional makeup of two LCD baths compared to the higher dischargeable ion concentration of the HCD bath and a bath disclosed in United States patent 4,102,756. It should be noted that no surfactant is added to the LCD baths and that the concentrations of nickel and iron salts are decreased below those in both other baths. The primary function of a surfactant in an electrolyte is to act as a wetting agent and to prevent hydrogen bubbles formed during plating from adhering to the cathode surface. The wetting characteristics of the wafer surface have been improved very significantly by "ashing" the wafer surface prior to plating rather than adding surfactant to the bath. The plating cell used is a modification of the cell shown in U.S. patent 4,102,756. The plating cells comprise a rectangular PVC tank, a cathode that holds six substrates placed at the bottom of a cell, and an anode made of nickel placed at the top. The distance between anode and cathode is 3.5 cm. Both the anode and the cathode fill the cell from wall to wall in each direction. The bath is agitated over the cathode area by a paddle which moves back and forth over the surface of the cathode at an approximate distance of 2 to 3 mm. The rate of agitation is maintained at 1 cycle per second. Fresh solution is pumped in between the cathode and the anode at a rate of 1—10 litres per minute. The bath volume is 200 litres. The reason for this large volume of a bath is to provide stability and reproducibility between plating processes. The parameters for the three different plating process are given in Table II with two sets of LCD values, LCD—A and LCD—B.

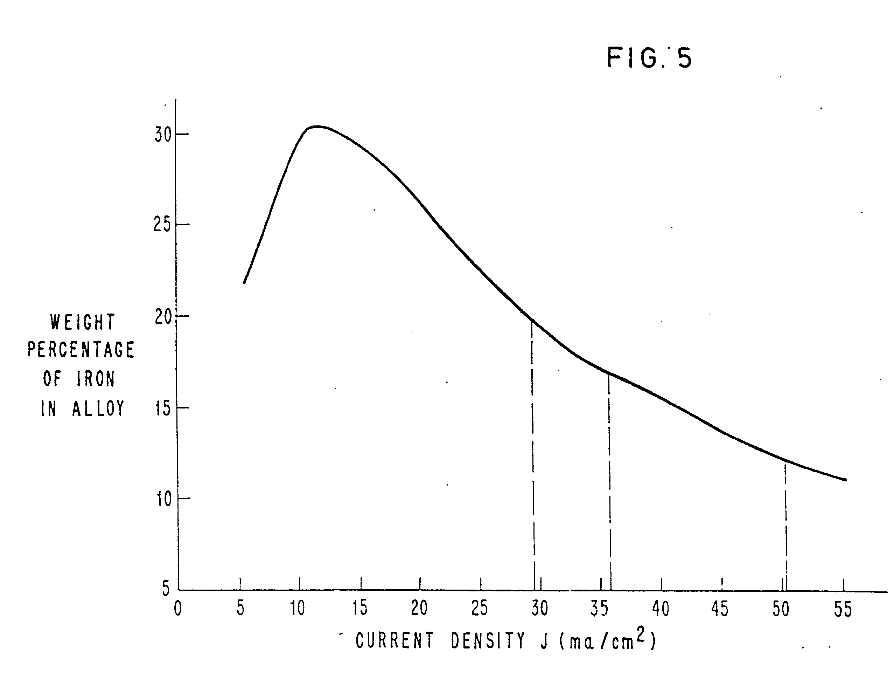

Table III gives the compositional variation across the element and along the diagonal of the wafer 29 in FIG. 2 for the HCD bath. The average composition difference between points 22 and 23 on the element is 6.4% whereas the compositional gradient along the diagonal of the wafer 29 is 4.6%. The large percentage variation in Fe composition in the alloy can be clearly seen from FIG. 5 which is a plot of the composition of the plated film versus the current density J for the HCD bath. The slope of the curve is very steep, thus a small change in current density J such as that caused by the geometry of the element gives rise to a moderate fluctuation in the composition of the plated material. The compositional difference between points 22 and 23 in FIG. 3 on the element shows a change in composition which is equivalent to the composition which would be produced by an overall change of 58% in current density. However, the change is not entirely attributable to current density change but it is also significantly influenced by diffusion layer thickness. At high current densities the topography variations cause variations in diffusion layer thickness which are reduced at lower current densities.

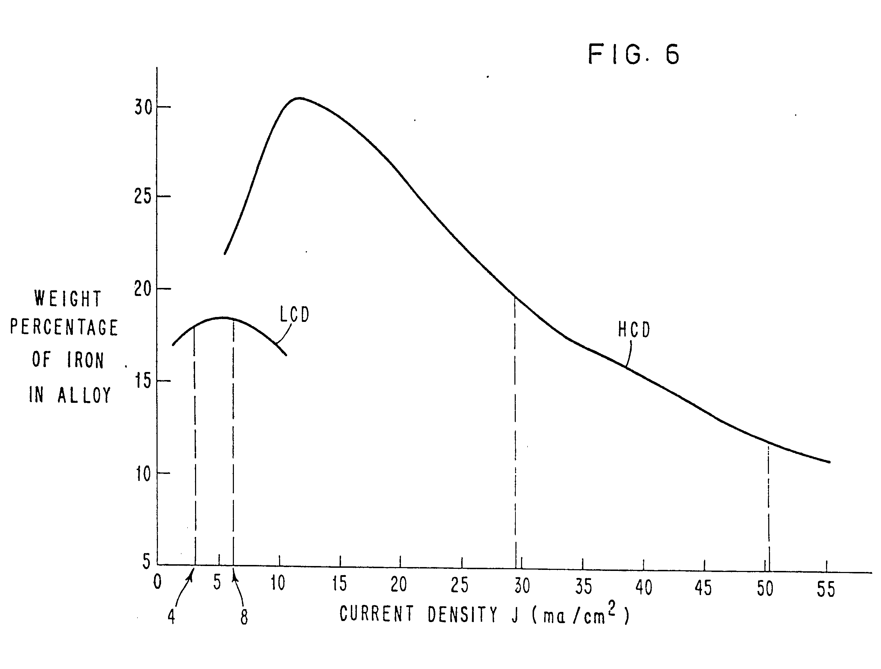

FIG. 6 is a plot of the composition of the plated nickel-iron alloy versus the current density for the LCD—A bath and for the HCD bath. Using the LCD—A bath, a 100% variation in current density from 4 milliamps to 8 milliamps per square centimetre produces about only a very small 0.5% change in composition. This range of current density values can be expected between points 22 and 23 of the element in FIGS. 1 and 3 under such conditions. The LCD—A bath yields a far superior compositional uniformity between the yoke and pole tips region of each transducer and between transducers over the entire wafer.

Table IV gives the electron microprobe compositional analysis of points 22 and 23 of an element for all six wafer positions in a cathode along its diagonal. In Table V, positions 1—6 in a square wafer were in three horizontal rows as follows:

|   |   |
|---|---|
| 1 | 2 |
| 3 | 4 |
| 5 | 6 |

Table VI gives the effect of compositional uniformity across an element on its unsaturated inductance value.

With the LCD—A bath, a substantially constant nickel-iron alloy ratio can be maintained over a range of current density values on complex shapes such as the pole pieces for thin film magnetic head elements. A low current density J of from 5 to 10 milliamps per centimetre squared minimizes the diffusion layer and current density distribution effects to obtain a uniform composition deposit over a topographical excursion. The critical aspects of the plating bath are the combination of the relatively low total quantity of dischargeable metal ions in the bath and the slow deposition rate attained by

4

plating at a low value of current density J. The repeatability of composition is a function of the current density and the total salt content of the dischargeable species.

The actual LCD bath composition is not critical; that is, rather broad ranges of $Ni^{++}$ and $Fe^{++}$ as shown for the LCD—B bath can be used as well as different ratios of $SO_4^-$ to $Cl^-$. What is critical is the combination of the concentration of total dischargeable metal ions ($Ni^{++}$ and $Fe^{++}$) and the slow deposition rate attained by low current density (LCD) plating.

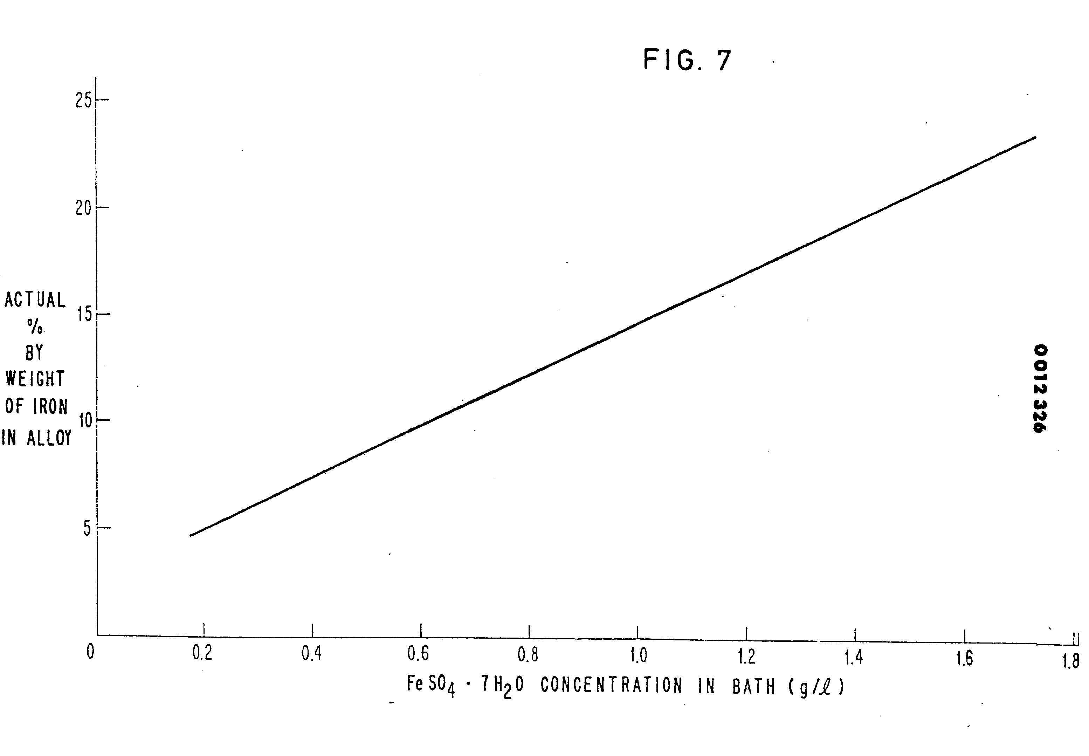

The specific formulation referred to as the LCD—B bath not only produces uniform compositions but also a highly repeatable overall range of compositions. See FIG. 7 with a slope of 1.15 wt.% Fe in deposit/0.1 g/l $FeSO_4$ at stated conditions and a range of 0.2—1.7 g/l $FeSO_4$ $7H_2O$ which comprises a range from 0.04—.3417 g/l of $Fe^{++}$ ions which can also be in solution with anions such as $Cl^-$. Analysis of FIG. 7 shows that one can secure 5% Fe at 0.2 g/l $FeSO_4 \cdot 7H_2O$, (0.04 g/l $Fe^{++}$); 10% Fe at 0.6 g/l $FeSO_4 \cdot 7H_2O$, (0.12 g/l $Fe^{++}$); 15% Fe at 1.04 g/l $FeSO_4 \cdot 7H_2O$, (0.21 g/l $Fe^{++}$); and 20% Fe at 1.45 g/l $FeSO_4 \cdot 7H_2O$ (0.29 g/l $Fe^{++}$).

The current density required to discharge an alloy of 81:19 Ni:Fe or other desired composition is primarily a function of the ratio of Ni:Fe in the bath. We have found the repeatability of deposit composition from run to run is a function of the current density and total salt content of dischargeable species ($Ni^{++}$ and $Fe^{++}$). This is best summarized in Table VII.

The mid-Ni and high Ni baths show the low current density (LCD) deposition is responsible for the topographical compositional uniformity while the low salt content is the prime contributor to repeatability.

A comparison of a deposit from the LCD—B bath and the HCD bath is shown in Table VII. The HCD baths yield about 5—7% gradients in most case applications for pole piece 15 where the LCD—B bath yields about a 2% gradient.

The two most obvious differences between the thin film inductive heads whose magnetic elements are deposited by sputtering or plating from the HCD NiFe baths are; 1) the recording properties of the sputtered films are significantly more uniform across the substrate; and 2) the sputtered film heads display lower read amplitudes. The first is attributed to compositional uniformity inherent in the sputtering process, the second, to the presence of a higher anisotropy field ($H_k$) in the sputtered films relative to plated films which results in a lower permeability at a given moment ($4\pi$ Ms).

The work reported in this section is aimed at producing electrodeposited elements of compositional uniformity significantly improved over the routine HCD deposits, particularly in the vertical excursions from planar encountered in the fabrication of pole piece 15 layers.

This section is divided into three parts; 1) a comparison of composition gradients in pole piece 15 deposits from LCD and HCD; 2) a comparison of the thickness distribution in batch A compared to batch B; 3) a description of the fabrication of batch A.

A comparison of the compositional distribution from the HCD NiFe and the LCD baths in pole piece 15 configuration is tabulated in Table IX, areas 22, 24, 28 used as test site are shown in FIGS. 1 and 3.

It is obvious from Table IX that lower current densities promote greater uniformity in composition in our worst case application, which is deposition of upper pole piece 15.

Tables VIII and X presents the second benefit of the LCD bath; namely, improved thickness uniformity. The table is a comparison of the statistical analysis of "Lasetek" data collection from batch HCD wafers, (normal process, other member of HCD used various current densities) and LCD wafers (wafers 831, 832, 833). HCD wafers' magnetic layers were deposited at 26.9 ma/cm² from the HCD bath, while LCD wafers were fabricated at 10 mA/cm² from the LCD bath.

With the exception of the electrodeposition of the magnetic layers, the fabrication of batch A proceeded as for a routine inductive device. The magnetic layers or the object of interest in batch A were plated in a two-wafer fixture using an eight liter LCD NiFe bath developed for the purpose of providing improvement in thickness and compositional uniformity of the Permalloy alloy layers.

To summarize, with this invention operation of a NiFe electroplating bath in a manner in which current density is not a critical controlling factor in determining the composition of a deposit permits the deposition of films of excellent compositional uniformity over entire plating fixtures as well as over complex topographical patterns. This is of major importance as it now permits the fabrication of upper pole piece layers 15 of thin film heads 9 with excellent compositional uniformity.

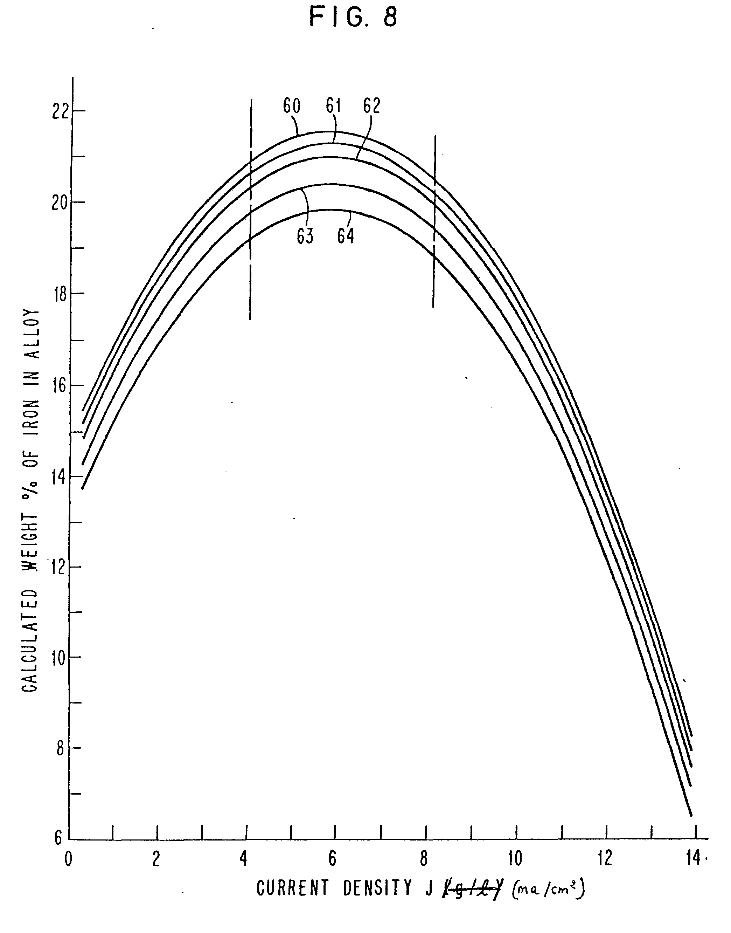

In FIG. 8 a simulation of %Fe in the deposit as a function of current density is plotted at various levels of NaCl content. The equation used to generate these curves was derived by regression analysis of the data collected for 76 runs of LCD baths at various levels of Ni, $FeSO_4$, NaCl content run at various current densities measuring the response (weight %Fe) by atomic absorption analysis of the deposition films. These runs were made in a plating cell described above with pH=3.0 at a room temperature value of 23—24°C, and an agitator velocity equal to 1 cycle/sec. Curves 60—64 are made for increasing concentrations of NaCl in grams per litre of 0, 17.5, 25, 50 and 100 in that order, using 1,5 g/l $FeSO_4$ $7H_2O$ and 13.3 g/l $Ni^{++}$.

The bath simulated 13.3 g/l Ni (0.226M), 1.5 g/l $FeSO_4$ $7H_2O$ (0.054M) was used at 10 ma/cm² as LCD—B to fabricate batch A. The improved uniformity obtained is clearly presented below in a section entitled "Low Current Density Permalloy and Batch A".

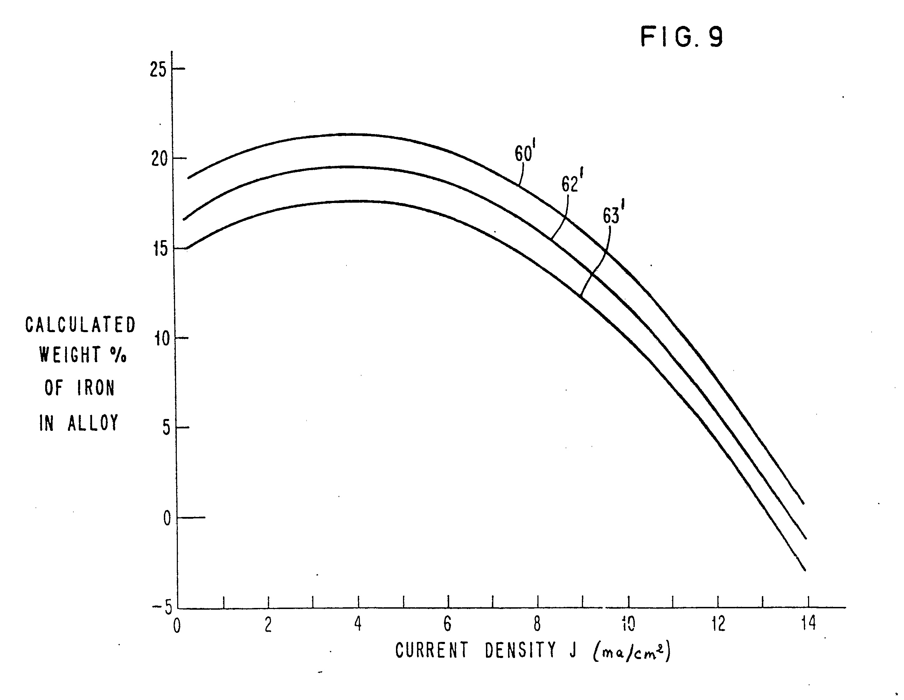

Obviously, the regression equation obtained above is not exactly correct, as a quick look at FIG. 9 will reveal, one could hardly expect to obtain negative iron contents. However, the area of interest was still indicated to be about 5 ma/cm², and the values of Fe content of about 18% are desirable. In this case, the $FeSO_4$ $7H_2O$ concentration is down by 1/3 to 1.0 g/l and the $Ni^{++}$ concentration is down to 12.0 g/l. The values of NaCl are 0, 25, and 50 g/l for curves 60', 62' and 63' respectively.

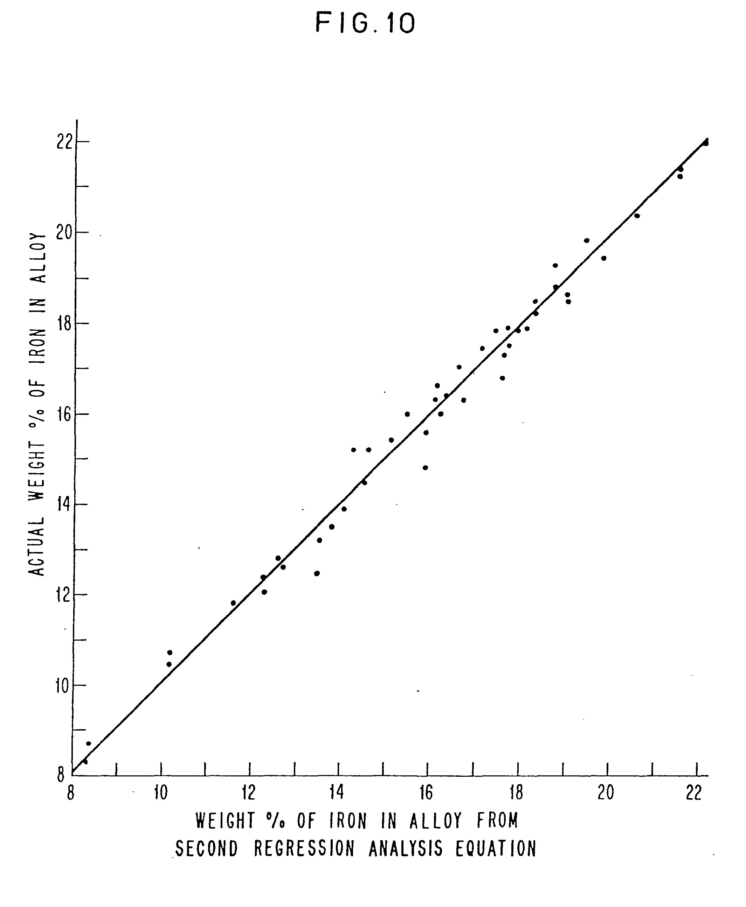

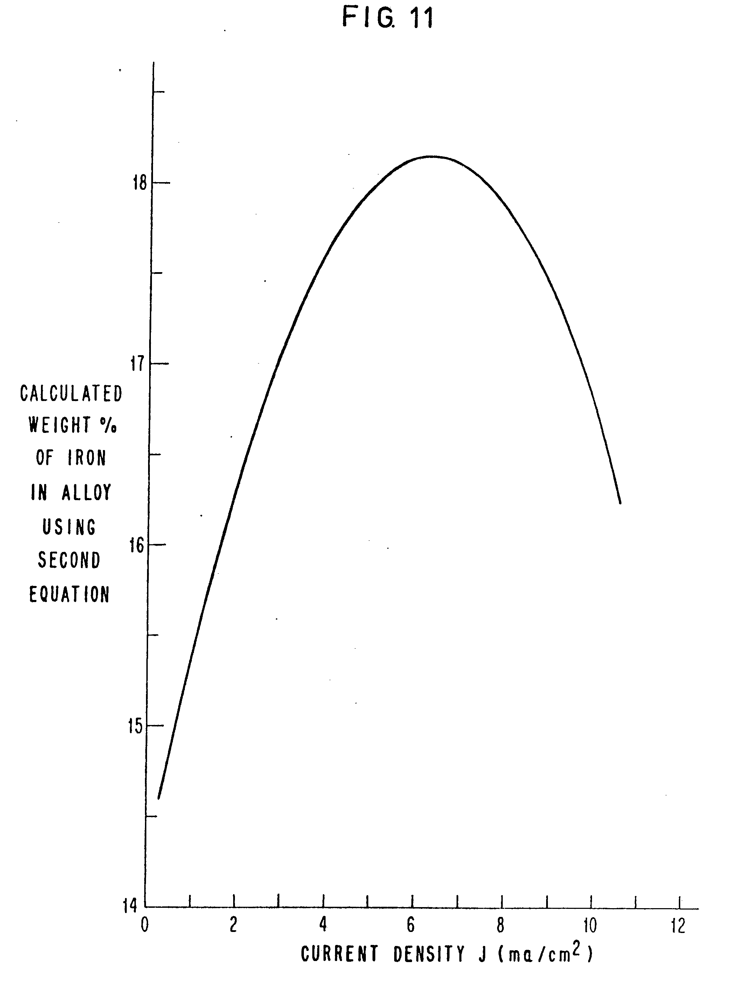

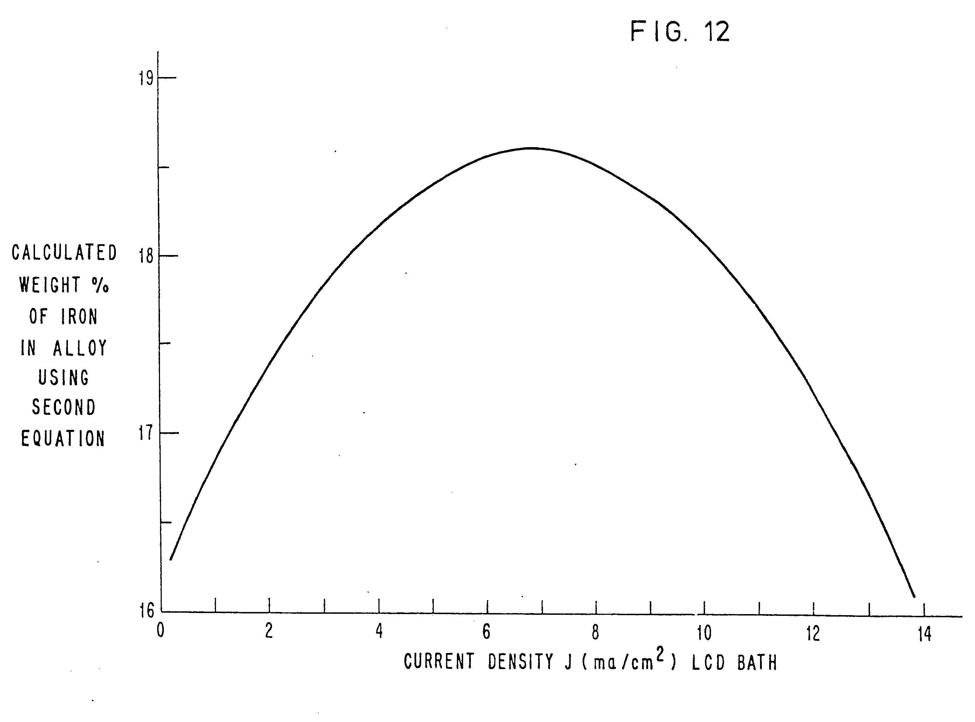

A second regression equation, FIG. 10, was derived from data collected on 144 LCD runs. The equation used was X(%Fe in film) = 106 −2.6 ($Ni^{++}$ g/l) + 5.39 ($Fe^{++}$ g/l) x J ma/cm² −0.1 $J^2$ (ma/cm²)² + 0.41 ($Ni^{++}$ g/l)². This resulted in the basic formulation LCD as seen in FIG. 11 for values of $FeSO_4$ $7H_2O$ of 1.15 g/l for $Ni^{++}$ of 12 g/l and for NaCl of 25 g/l. In another simulation comparison, FIG. 12 shows the improved product of regression analysis on 184 films from LCD runs for values of $FeSO_4$ $7H_2O$ of 1.2, $Ni^{++}$ of 12 g/l and NaCl of 25 g/l and high (27 ma/cm²) runs.

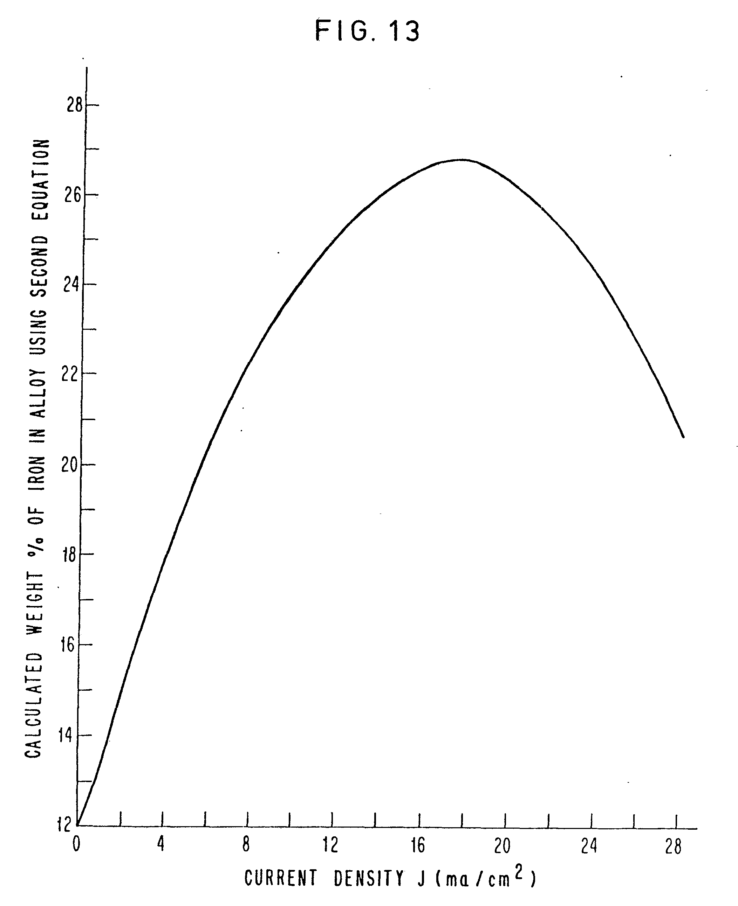

FIG. 13 shows a similar curve for an HCD bath with 3.0 g/l $FeSO_4$ $7H_2O$, 14.5 g/l $Ni^{++}$ and 0 g/l NaCl.

The simulation of the HCD bath used at about 29 ma/cm² reveals one of the reasons behind the compositional gradients observed in the upper pole piece 15 structure in FIG. 1, local current density gradients. This combined with differences in the diffusion, or depletion, layer thickness as a result of agitation differentials caused by vertical topographical excursions from planar result in gradients as high as 5 weight %Fe between zero throat height and the bulk of pole piece 15 over the conductor pattern in Table VIII. The use of LCD baths and operating parameters reduce this to 1% Fe or less.

The actual composition of the deposit from a NiFe bath is fundamentally dependent on the thickness of the diffusion layer (or depletion zone formed by ions in the area above the cathode). Diffusion layer thickness is dependent on the degree of agitation and current density. The latter is the producer of polarization and permits deposition to occur.

Taking for HCD bath values of $FeSO_4$ $7H_2O$ of 3 g/l, $Ni^{++}$ of 14.5 g/l and NaCl of zero as a starting point, the following table shows "what if:"

| What if we: | Then: |
|---|---|
| Reduce current density from 6—2 or less ma/cm² | Other than deviating from a desirable (magnetically) composition, the reproducibility of deposition rates and hence uniformity of thickness would be adversely affected as more and more potential goes into production of $H_2$ as opposed to metal. |
| Increase current density above about 10 mA/cm² | The deposition begins to take on the diffusion limited response to local current density effects, hence non-uniformity begins to be a problem. |
| Change the $Ni^{++}$ content of the bath | The general shape of the curve would be unchanged, only shifting inversely to the Ni content change. |
| Change the $Fe^{++}$ content of the bath | The general shape would remain but the area of min $d(Fe)/d(ma/cm^2)$ would shift upward to the right or downward to the left for an increase or decrease respectively. |

The overall composition of a deposit from a NiFe plating bath is apparatus sensitive. This is due to slight differences in the apparatus construction. Thus, duplication of the bath and apparatus used in this work will probably not produce identical deposits without adjustments to the operating current density and/or the $Fe^{++}$ ion concentration.

The composition gradients associated with the electrodeposition of NiFe over vertical topography can be eliminated by using low current density deposition in a region of operation where the current density is not the controlling parameter for composition of the deposit.

The elimination of compositional gradients in the structure of upper pole piece layer 15 is the single largest contributing factor to the reduction of the read signal "wiggle" problem and improved overall performance of thin film inductive heads recently produced.

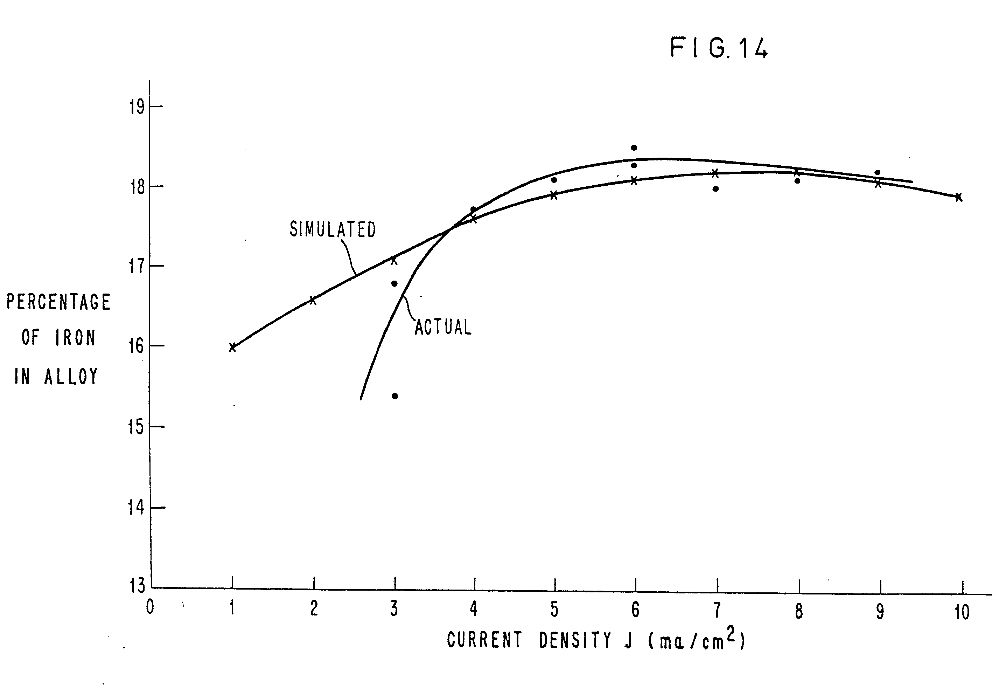

A final regression analysis equation accounts for 85.1% of the total variation of the data for 183 samples. The equation is as follows: X (%Fe in alloy) = 0.457 + 24.18 [$Fe^{++}$] − 3.07 [$Ni^{++}$] + 0.45 [NaCl] − 1463.5 [$Fe^{++}$] + 1.675 [$Fe^{++}$] x J − 0.0005 $J^2$ + 5.67 [$Ni^{++}$] − 1.99 [$Ni^{++}$] x [NaCl], where $Ni^{++}$, $Fe^{++}$ and NaCl values are molar concentrations and J is the current density in ma/cm² as usual. FIG. 14 shows a plot similar to the calculated and actual weight percentages of iron in the alloy versus current density J. The modified LCD—A iron rich bath contained 12.5 g/l $Ni^{++}$, 1.31—1.34 g/l $FeSO_4$ and 25 g/l NaCl.

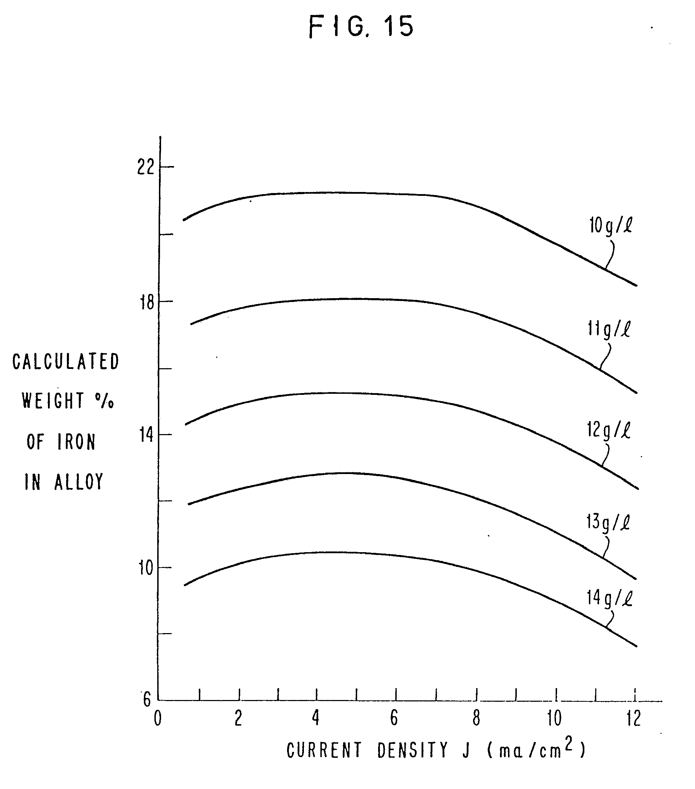

FIG. 15 shows calculated percentages of Fe in the alloy versus current density J for five values of $Ni^{++}$ concentration in the bath at 0.8 g/l $FeSO_4$ and 25 g/l NaCl. The data was based upon the last regression analysis equation.

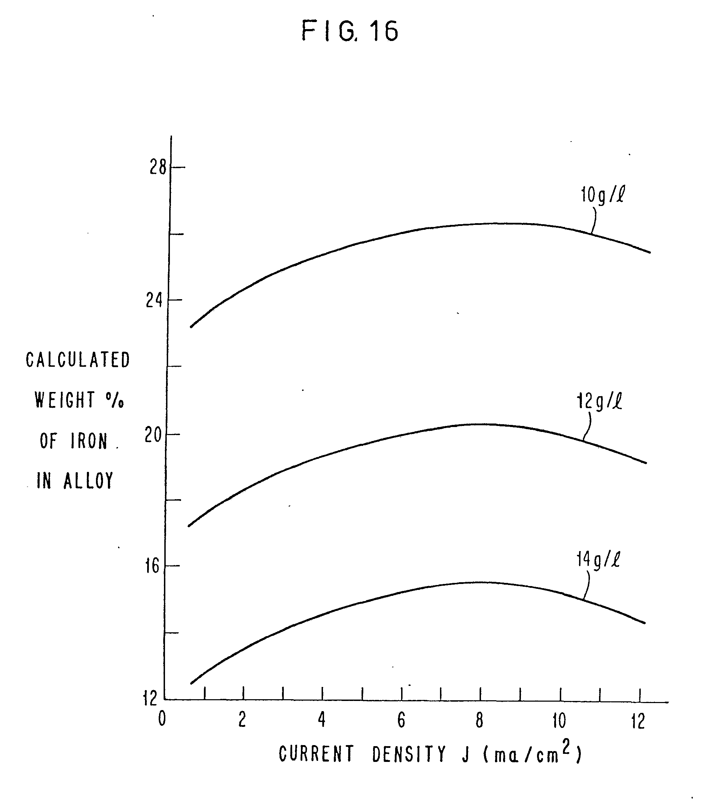

FIG. 16 is a similar set of curves of those of FIG. 15 for $Ni^{++} = 10$, 12 or 14 g/l and 1.4 g/l $FeSO_4$ and 25 g/l NaCl.

FIG. 14 and simulations in FIGS. 15 and 16 show what analysis of actual data has shown, i.e., that in general the curves are most flat within the preferred range, between about 4 $ma/cm^2$ and 8 $ma/cm^2$. On the other hand, acceptable results are generally achieved in the range between about 2 $ma/cm^2$ and 12 $ma/cm^2$. It should be noted that in many cases below 3 $ma/cm^2$ hydrogen evolution becomes a problem and below 2 $ma/cm^2$ hydrogen evolution is so great that reliability and repeatability of plating is severely reduced.

## TABLE I

| Alloy | 20 Fe : 80 Ni HCD | 48 Fe : 52 Ni U.S.P. 4,102,756 Table IV | 20 Fe : 80 Ni LCD–A | LCD–B |
|---|---|---|---|---|
| Total Ni$^{++}$ | 13.7 g/l | 26.9 g/l | 12.4 g/l | 13.7 g/l |
| Total Fe$^{++}$ | 0.6 g/l | 0.42 g/l | 0.24 g/l | 0.2–0.3 g/l |
| Current Density (J) | 36 ma/cm² (25–32 ma/cm²) | 5 ma/cm² (5–40 ma/cm²) | 4 ma/cm² | 5–10 ma/cm² |
| NiCl$_2$ 6H$_2$O | 39 g/l | 109 g/l | 35.3 g/l | 39 g/l |
| (Ni$^{++}$) | (9.7 g/l) | (26.9 g/l) | (8.7 g/l) | (9.7 g/l) |
| NiSO$_4$ 6H$_2$O | 16.3 g/l | — | 14.7 g/l | 16.3 g/l |
| (Ni$^{++}$) | (4 g/l) | | (3.7 g/l) | (4 g/l) |
| FeSO$_4$ 7H$_2$O | 3 g/l | — | 1.2 g/l | 1–1.5 g/l |
| (Fe$^{++}$) | (0.6 g/l) | | (0.24 g/l) | (0.2–0.3 g/l) |
| FeCl$_2$ 4H$_2$O | — | 1.5 g/l | — | — |
| (Fe$^{++}$) | | (0.42 g/l) | | |
| pH | 2.8 ± .05  (3.0) | 2.5 | 3.0 ± .05 | 3.0 |
| H$_3$BO$_3$ | 25 g/l | 25 g/l | 25 g/l | 25 g/l |
| Sodium Saccharin | 1.5 g/l | 0.8 g/l | 0.75 g/l | 1.5 g/l |
| NaCl | 0 | 0 | 25 g/l | 0–50 g/l |
| Wetting Agent | 0.1 g/l | — | — | 0.1 g/l |
| Temperature °C | 23°  (30°) | 25° | 23° | 30° |
| Speed | 1 cps | 8"/sec | 1 cps | 1 cps |

**0 012 326**

TABLE II

| Parameters | HCD Bath | Patent 4,102,756 Table IV Bath | LCD—A Bath |
|---|---|---|---|
| Temperature °C | 23.0 | 25 ± 0.5 | 23.0 |
| pH | 2.8 ± .05 | 2.5 ± .05 | 3.0 ± .05 |
| Current Density ma/cm$^2$ | 36.0 (25—32) | 5 (5—40) | 4.0 |
| Paddle Speed | 1.0 cycle/sec. | 8"/sec. | 1.0 cycle/sec. |
| Plating Rate microns/sec. | 0.01196 (s) 0.01008 | (0.00083—0.5) | 0.00106 |

## TABLE III

### Element Composition Analysis for Wafer from HCD Bath

| Location on Wafer (FIG. 2) | 1 × 1 | | | | 4 × 6 | | | | 6 × 8 | | | |
|---|---|---|---|---|---|---|---|---|---|---|---|---|
| Location on Element (FIGS. 1–3) | 21 | 22 | 23 | 24 | 21 | 22 | 23 | 24 | 21 | 22 | 23 | 24 |
| % Iron | 17.2 | 14.9 | 19.7 | 20.9 | 15.4 | 12.3 | 19.6 | 19.2 | 14.9 | 12.0 | 19.5 | 18.4 |
| Difference Between Pt. 22 and Pt. 23 | 4.8 | | | | 7.3 | | | | 7.5 | | | |

| Location on Wafer (FIG. 2) | 8 × 10 | | | | 11 × 14 | | | |
|---|---|---|---|---|---|---|---|---|
| Location on Element (FIGS. 1–3) | 21 | 22 | 23 | 24 | 21 | 22 | 23 | 24 |
| % Iron | 14.8 | 12.7 | 18.8 | 18.5 | 13.0 | 10.0 | 16.2 | 15.1 |
| Difference Between Pt. 22 and Pt. 23 | 6.1 | | | | 6.2 | | | |

TABLE IV

Element Composition Analysis on Wafer from LCD Bath

| Location on Wafer FIG. 2 | 1 × 1 | | | | 4 × 6 | | | | 6 × 8 | | | |
|---|---|---|---|---|---|---|---|---|---|---|---|---|
| Location on Element (FIG. 1) | 21 | 22 | 23 | 24 | 21 | 22 | 23 | 24 | 21 | 22 | 23 | 24 |
| % Iron | 20.6 | 21.0 | 21.0 | 21.2 | 19.7 | 20.0 | 20.1 | 20.4 | 19.2 | 19.5 | 20.0 | 20.5 |
| Difference Between Pt. 22 and Pt. 23 | 0 | | | | 0.1 | | | | 0.5 | | | |

| Location on Wafer FIG. 2 | 8 × 10 | | | | 11 × 14 | | | |
|---|---|---|---|---|---|---|---|---|
| Location on Element (FIG. 1) | 21 | 22 | 23 | 24 | 21 | 22 | 23 | 24 |
| % Iron | 19.0 | 19.9 | 20.0 | 20.0 | 20.6 | 21.1 | 21.2 | 21.8 |
| Difference Between Pt. 22 and Pt. 23 | 0.1 | | | | 0.1 | | | |

TABLE V

LCD Bath Composition Analysis on Six Position Cathode

| Cathode | Element Location on Wafer (FIG. 2) | | | | | | | | | |
| --- | --- | --- | --- | --- | --- | --- | --- | --- | --- | --- |
| | 1 × 1 | | 4 × 6 | | 6 × 8 | | 8 × 10 | | 11 × 14 | |
| Position | 22* | 23* | 22* | 23* | 22* | 23* | 22* | 23* | 22* | 23* |
| 1 | 17.0 | 17.4 | 17.3 | 17.6 | 17.5 | 17.3 | 17.8 | 17.3 | 17.8 | 17.7 |
| 2 | 17.6 | 17.4 | 17.6 | 17.5 | 17.4 | 17.4 | 17.8 | 17.4 | 17.8 | 17.7 |
| 3 | 18.2 | 18.0 | 17.8 | 18.1 | 17.9 | 17.9 | 17.8 | 17.8 | 17.6 | 17.8 |
| 4 | 17.5 | 17.9 | 18.2 | 18.0 | 18.2 | 17.9 | 18.0 | 18.2 | 18.8 | 18.5 |
| 5 | 18.2 | 18.6 | 18.3 | 18.2 | 17.5 | 17.1 | 17.7 | 17.6 | 17.8 | 18.0 |
| 6 | 18.0 | 17.8 | 17.5 | 17.5 | 17.0 | 17.4 | — | — | — | — |

* FIGS. 1 and 2.

**0 012 326**

TABLE V (Continued)

LCD Bath Composition Analysis on Six Position Cathode

| Cathode Position | Av. Fe % | Maximum Difference in % Fe Within El. | Maximum Difference in % Fe Across Wafer |
|---|---|---|---|
| 1 | 17.4 | 0.4 | 0.8 |
| 2 | 17.4 | 0.4 | 0.4 |
| 3 | 17.9 | 0.3 | 0.6 |
| 4 | 18.1 | 0.4 | 0.8 |
| 5 | 17.9 | 0.4 | 1.5 |
| 6 | 17.5 | 0.4 | 1.0 |

TABLE VI

Effect of Process Change on Unsaturated Inductance

| | | |
|---|---|---|
| (A saturated)  Nanohenries | 71.9  (7) * | 99.8  (6) * |
| Permalloy | HCD | LCD |
| Max. Insulation Thickness | | |
| Microns | 8 | 8 |
| $\Delta$ Composition % Fe | 5—7 | 0—1 |
| Composition  % Fe | 17 | 17 |
| | (range 14%—21%) | (range 16%—18%) |

* (Standard Deviation)

$\Delta$ Composition is the difference in values of composition at points 22 and 23 on a head.

TABLE VII

| Bath | Molar Concentrations | | | Ni/Fe wt. % | Current Density (ma/cm²) | Uniformity of Composition | Repeatability of Composition |
|---|---|---|---|---|---|---|---|
| | $NiSO_4$ | $NiCl_2$ | $FeSO_4$ | | | | |
| HCD | 0.062 | 0.164 | 0.0108 | 20.9 | 26.9 | fair | very good |
| LCD–B | 0.062 | 0.164 | 0.00504 | 41.8 | 10.0 | excellent | excellent |
| Mid-Ni | 0.183 | 0.492 | 0.0129 | 52.3 | 10.0 | excellent | fair |
| High Ni | 1.00 | 0.210 | 0.0252 | 48.0 | 5.0 | excellent | poor |

TABLE VIII

| Batch # | Wafer # | Bath | Wt. % Ni at Site | | | | | |
| --- | --- | --- | --- | --- | --- | --- | --- | --- |
| | | | Pole Piece 15 | | | | Pole Piece 11 | |
| | | | 22 | 23 | 24 | 25 | 26 | 27 |
| B | 830 | HCD | 84 | 78 | 84 | 84 | 79 | 80 |
| A | 831 | LCD | 81 | 81 | 80 | 80 | 80 | 80 |
| | 832 | LCD | 81 | 80 | 79 | 79 | 79 | 79 |
| | 833 | LCD | 82 | 82 | 81 | 81 | 81 | 81 |
| C | 838 | HCD | 81 | 80 | 77 | 76 | 81 | 80 |
| D | 3148 | HCD | 89 | 89 | 84 | 82 | 83 | 84 |
| | 3149 | HCD | 87 | 86 | 84 | 82 | 81 | 84 |

## TABLE IX

| Plating Bath | Current Density | Wt. % Fe | Sites | (normalized) |
|---|---|---|---|---|
| Bath | ma /cm² | 28 | 24 | 22 |
| HCD — URC* | 26.9 | 15.4 (0.77) | 20.1 (1.00) | 18.2 (0.91) |
| HCD — Centre | 26.9 | 19.5 (0.80) | 24.4 (1.00) | 22.7 (0.93) |
| Ni—1/4—6—Centre | 13.0 | 22.4 (0.87) | 25.7 (1.00) | 24.5 (0.95) |
| LCD—URC* | 10.0 | 20.3 (0.90) | 22.6 (1.00) | 23.1 (1.02) |
| LCD—Centre | 10.0 | 19.0 (0.93) | 20.4 (1.00) | 21.3 (1.04) |

* upper right corner (URC).

## TABLE X

| Layer | # Measurements | High | Low | Range | Mean | $\sigma$ | $(3\sigma/\text{mean}) \times 100$ |
|---|---|---|---|---|---|---|---|
| 11 Centre | 176 | 1.97 | 1.36 | 0.61 | 1.70 | 0.17 | 30% |
| 11 | 176 | 2.71 | 1.86 | 0.85 | 2.31 | 0.24 | 31.2 |
| 11 | 528 | 2.57 | 2.08 | 0.49 | 3.26 | 0.07 | 9.3 |
| 15 Centre | 352 | 2.20 | 1.42 | 0.78 | 1.99 | 0.15 | 22.6 |
| 15 | 176 | 2.86 | 2.14 | 0.72 | 2.62 | 0.15 | 17.2 |
| 15 | 792 | 2.78 | 2.23 | 0.55 | 2.57 | 0.065 | 7.6 |

This invention is useful in the manufacture of magnetic thin film structures including Permalloy nickel iron, such as magnetic recording heads, magnetic bubble devices, plated wire memory, plated wire sensors, and the like.

**Claims**

1. A method of electroplating nickel-iron alloy onto an article with a relatively high degree of uniformity of nickel-iron alloy composition over a range of plating current densities characterised in that the method comprises employing a plating current density from 2 milliamperes per centimetre squared to 12 milliamperes per centimetre squared, with a plating bath solution having ferrous ion concentration between 0.15 and 0.3 grams per litre and a nickel ion concentration between 10 and 14 grams per litre, the pH of the bath being 3.

2. A method according to claim 1, wherein a predetermined value of about X% of iron content by weight in the alloy is in accordance with the regression analysis equation $X = 106 - 12.6 (Ni^{++} g/l) + 5.39 (Fe^{++} g/l \times J \ ma/cm^2) - 0.1 \ J^2 \ ma/cm^2 + 0.41 (Ni^{++} g/l)^2$, the values of $Ni^{++}$ g/l and $Fe^{++}$ g/l being selected to provide substantial equality with said value X for a current density J of 2—12 ma/cm².

## 0 012 326

3. A method according to any one of the preceding claims wherein said current density is within a range from 4 milliamperes per centimetre squared to 8 milliamperes per centimetre squared.

**Patentansprüche**

1. Verfahren zum Elektroplattieren einer Nickel-Eisen-Legierung auf einen Gegenstand, wobei die Zusammensetzung der Nickel-Eisen-Legierung über einen Bereich von Plattierstromdichten in einem relativ hohen Maß einheitlich ist, dadurch gekennzeichnet, daß bei dem Verfahren Plattierstromdichten im Bereich zwischen 2 und 12 mA/cm² angewandt werden, wobei die Plattierbadlösung eine Eisen (II)-Ionenkonzentration im Bereich zwischen 0,15 und 0,3 Gramm pro Liter und eine Nickel-Ionenkonzentration im Bereich zwischen 10 und 14 Gramm pro Liter aufweist und der $p_H$-Wert des Bades bei 3 liegt.

2. Verfahren nach Anspruch 1, bei dem ein vorherbestimmter Wert von X Gew.% in der Legierung sich entsprechend des Regressionsanalysengleichung $X = 106 - 12,6$ (Ni$^{++}$ g/l) $+ 5,39$ (Fe$^{++}$ g/l $\cdot$ J mA/cm²) $- 0,1$ J² mA/cm² $+ 0,41$ (Ni$^{++}$ g/l)² ergibt, wobei je Gramm pro Liter-Werte von Ni$^{++}$ und Fe$^{++}$ so ausgewählt werden, daß der genannte X-Wert erhalten wird, wenn die Stromdichte J im Bereich zwischen 2 und 12 mA/cm² liegt.

3. Verfahren nach einem der vorangegangenen Patentansprüche bei dem die genannte Stromdichte innerhalb eines Bereichs zwischen 4 und 8 mA/cm² liegt.

**Revendications**

1. Procédé d'électrodéposition d'alliages nickel-fer sur un élément, ledit procédé permettant d'obtenir une uniformité relativement grande de la composition dudit alliage dans une gamme de densités de courant d'électrodéposition et étant caractérisé en ce qu'il consiste à employer une densité de courants d'électrodéposition comprise entre 2 et 12 mA/cm², avec une solution de bain d'électrodéposition comportant une concentration d'ions ferreux comprise entre 0,15 et 0,3 g/l et une concentration d'ions de nickel comprise entre 10 et 14 g/l, le pH du bain étant égal à 3.

2. Procédé selon la revendication 1, caractérisé en ce qu'une valeur prédéterminée d'environ X% en poids de fer dans l'alliage est conforme à l'équation de regression $X = 106 - 12,6$ (Ni$^{++}$ g/l) $+ 5,39$ (Fe$^{++}$ g/l J mA/cm²) $- 0,1$ J² mA/cm² $+ 0,41$ (Ni$^{++}$ g/l), les valeurs de Ni$^{++}$ g/l et de Fe$^{++}$ g/l étant choisies de manière à permettre d'obtenir une égalité approximative avec ladite valeur X pour une densité de courant J comprise entre 2 et 12 mA/cm².

3. Procédé selon l'une quelconque des revendications précédentes, caractérisé en ce que ladite densité de courant est comprise dans une gamme de 4 à 7 mA/cm².

FIG. I

FIG. 2

FIG. 3

**0012326**

# FIG. 4

WEIGHT PERCENTAGE OF IRON IN ALLOY

FIG. 5

WEIGHT
PERCENTAGE
OF IRON
IN ALLOY

CURRENT DENSITY J (ma/cm$^2$)

0012326

3

FIG. 6

# FIG. 7

ACTUAL % BY WEIGHT OF IRON IN ALLOY (y-axis)

FeSO$_4$ · 7H$_2$O CONCENTRATION IN BATH (g/ℓ) (x-axis)

0012326

# FIG. 8

FIG. 9

CALCULATED
WEIGHT %
OF IRON
IN ALLOY

25
20
15
10
5
0
-5

60'
62'
63'

CURRENT DENSITY J $(ma/cm^2)$

2 4 6 8 10 12 14

# FIG.10

## FIG. 11

CALCULATED
WEIGHT %
OF IRON
IN ALLOY
USING
SECOND
EQUATION

CURRENT DENSITY J (ma/cm$^2$)

FIG. 12

CALCULATED WEIGHT % OF IRON IN ALLOY USING SECOND EQUATION

CURRENT DENSITY J (ma/cm$^2$) LCD BATH

0012326

# FIG. 13

FIG.14

FIG. 15

CALCULATED
WEIGHT %
OF IRON
IN ALLOY

CURRENT DENSITY J ( ma/cm$^2$ )

# F I G. 16

CALCULATED WEIGHT % OF IRON IN ALLOY (y-axis)

CURRENT DENSITY J (ma/cm$^2$) (x-axis)

10g/$\ell$

12g/$\ell$

14g/$\ell$